# EUROPEAN PATENT APPLICATION

(11) **EP 2 199 680 A1**
(43) Date of publication of application: **23.06.2010**
(21) Application number: 09252388.5
(22) Date of filing: 08.10.2009
(51) Int. Cl.: F23N 5/24

(54) **Combuster rumble**

(30) Priority: 19.12.2008 GB 0823085
(71) Applicant: Rolls-Royce plc, 65 Buckingham Gate London SW1E 6AT (GB)
(72) Inventor: Fox, Glyn Charles, Swadlincote Derbyshire, DE11 7ES (GB)
(74) Representative: Barcock, Ruth Anita

(57) **Abstract**

Apparatus and a method of detecting combustor rumble in a gas turbine engine (10) having combustion equipment that is susceptible to combustor rumble. The method has steps of:
locating a dynamic pressure transducer (36) remotely from the combustion equipment;
connecting a conduit (38) between the transducer and a location in the engine remote from the combustion equipment and subject to pressure fluctuations due to the combustor rumble; and
measuring the pressure fluctuations using the transducer (36) to detect combustor rumble.

## Description

The present invention relates to apparatus and a method for detecting combustor rumble in a gas turbine engine. It is applicable to a gas turbine engine having lean burn combustion equipment. It is particularly, though not exclusively, applicable to an aero gas turbine engine.

The environmental drive to reduce emissions from gas turbine engines, particularly for use to propel aircraft, leads to a need to use lean burn combustion equipment to eliminate fuel-rich pockets within the combustor. This means the reduction of the air to fuel ratio, in some cases to the extent that the temperature in the combustor falls below the stoichiometric level, which generates problems with flame stability. At lean air to fuel ratios a slight change in the ratio results in a large change in heat release. Hence the heat exchange reaction in the combustor is unsteady and that drives pressure and velocity fluctuations. These fluctuations manifest as an audible rumbling sound known as combustor rumble, being thermo-acoustic oscillations at discrete frequencies. Combustor rumble may cause fatigue failure of components in the engine and / or may cause passenger discomfort, depending on the frequency of the rumbling. There is a need to detect combustor rumble so that control can be applied to cancel it out to reduce or negate its negative effects.

Industrial gas turbine engines have formerly had more restrictive emissions targets than aero gas turbine engines and have, therefore, used lean burn technology for longer. A typical lean burn industrial gas turbine engine has a rumble probe mounted onto the outer combustor casing in order to detect combustor rumble. Electrical signals generated by the probe are then passed to engine control means, which attempts to control the rumble. The rumble probe typically comprises a dedicated dynamic pressure sensor, such as a piezoelectric transducer. Such a rumble probe mounted to the combustor casing of a conventional industrial gas turbine engine experiences temperatures of around 700K (450°C) and must be able to withstand prolonged periods subjected to this environment.

One problem with applying the prior art rumble probe to an aero gas turbine engine is that the combustor casing of such an engine is a considerably harsher environment, experiencing temperatures of around 950K (700°C). Currently available dynamic pressure transducers are not reliable at such elevated temperatures, which would instil unacceptable variability and uncertainty into combustor rumble detection if used. The transducers are also prohibitively expensive.

A further problem is that the weight of the engine is increased by the addition of a rumble probe. It is probable that two rumble probes would be required to provide redundancy, which further adds to the weight and cost of the engine. Additional complexity is also introduced, both to the engine hardware and to the control system.

The present invention seeks to provide apparatus and a method for combustor rumble detection that seeks to address the aforementioned problems.

Accordingly the present invention provides a gas turbine engine comprising combustion equipment susceptible to combustor rumble; a dynamic pressure transducer located remotely from the combustion equipment; and a conduit connecting the transducer with a location in the engine remote from the combustion equipment, the location subject to pressure fluctuations due to the combustor rumble; whereby the transducer is arranged to detect combustor rumble dependent on the pressure fluctuations received.

This is beneficial in terms of weight reduction and accuracy of measurement.

The combustion equipment may be a lean burn combustor.

The gas turbine engine may further comprise signal processing means. When the transducer generates an analogue signal, the signal processing means may comprise a filter, preferably a band pass filter. When the transducer generates a digital signal, the signal processing means may comprise a fast Fourier transform. The signal processing means may comprise a rumble threshold comparator. It may comprise a fault integrator, particularly an incremental counter.

The transducer may be an air pressure sensor.

The location in the engine remote from the combustion equipment may be at the exit of a compressor stage or at the exit of a propulsive fan.

The transducer may be arranged to detect core engine damage, particularly high pressure compressor damage, in addition to detecting combustor rumble.

A second aspect of the present invention provides a method of detecting combustor rumble in a gas turbine engine comprising the steps of:
locating a dynamic pressure transducer remotely from combustion equipment susceptible to combustor rumble;
connecting a conduit between the transducer and a location in the engine remote from the combustion equipment and subject to pressure fluctuations due to the combustor rumble; and
measuring the pressure fluctuations using the transducer to detect combustor rumble.

This is advantageous because the dynamic pressure transducer is subjected to a less harsh environment by being located remotely from the combustion equipment.

There may be a further step of processing the signal measured by the transducer, preferably by filtering the signal, by applying a root mean square calculation to the signal or by applying a fast Fourier transform to the signal. The processing step may comprise comparing the signal to a rumble threshold.

There may be a further step of applying fault integration to the signal, such as by increasing a counter by an increment for each signal above a rumble threshold and decreasing the counter by an increment for each signal below the threshold.

There may be a further step of setting a rumble detection flag depending on the measured pressure fluctuations.

The measured pressure fluctuations or the rumble detection flag setting may be passed to an engine control means.

The signal may be processed to detect core engine damage, particularly high pressure compressor damage.

The present invention will be more fully described by way of example with reference to the accompanying drawings, in which:
Figure 1 is a sectional side view of a gas turbine engine according to the present invention.
Figure 2 is a block diagram of a first embodiment of the present invention.
Figure 3 is a block diagram of a second embodiment of the present invention.

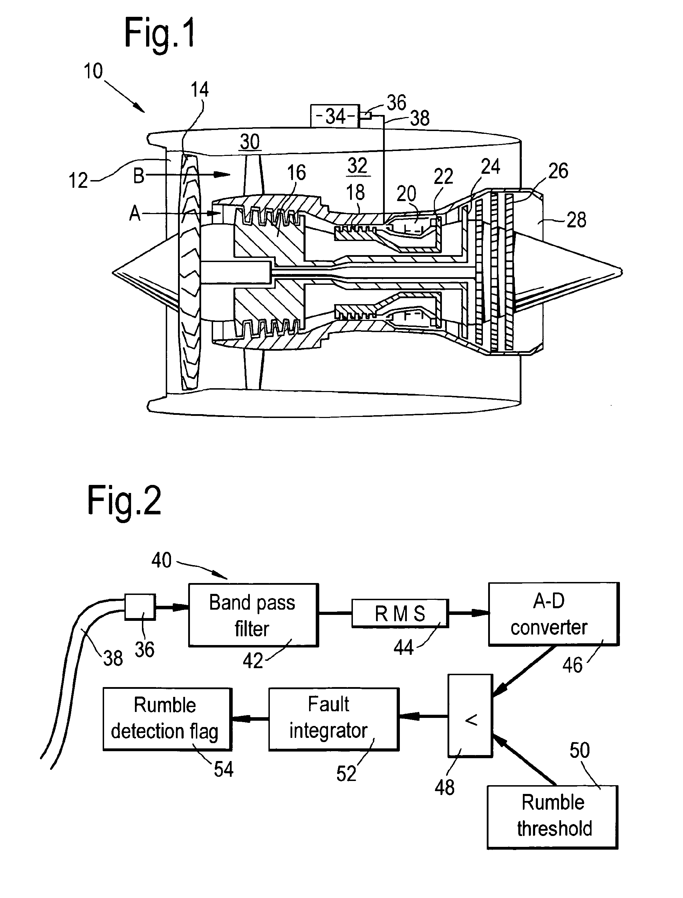

An exemplary embodiment of the present invention comprises a gas turbine engine 10 as shown in Figure 1. The engine 10 comprises an air intake 12 and a propulsive fan 14 that generates two airflows A and B. The gas turbine engine 10 further comprises, in axial flow A, an intermediate pressure compressor 16, a high pressure compressor 18, a combustor or combustion equipment 20, a high pressure turbine 22, an intermediate pressure turbine 24, a low pressure turbine 26 and an exhaust nozzle 28. A fan case 30 surrounds the gas turbine engine 10 and defines, in axial flow B, a bypass duct 32.

Mounted to the outside of the fan case 30 is engine control means 34, for example an engine electronic controller (EEC). Alternatively, the engine control means 34 comprises an engine monitoring unit (EMU). The engine control means 34 comprises a dynamic pressure transducer 36, which is integral with the engine control means 34 but alternatively may be connected thereto. A pipe 38 connects the transducer 36 to a location in the engine 10 that is upstream of the combustor 20 and which is subject to pressure fluctuations caused by combustor rumble, for example at the exit of the high pressure compressor 18. The transducer 36 is preferably a dynamic pressure transducer that is already provided on the engine 10 for other purposes of control and / or monitoring. This reduces the weight, cost and complexity of the engine 10 by using one component for more than one purpose. For example, a P30 (high pressure compressor exit) pressure sensor can perform the functions of transducer 36. The pipe 38 is designed to have minimal length and as few bends as possible to reduce weight, avoid signal attenuation and avoid trapping water at bends, which block the pressure fluctuations from being transferred through the pipe 38, although drainage holes may be provided at the bends.

A first embodiment of the apparatus and method according to the present invention is shown in Figure 2. The pipe 38 is shown that passes the pressure fluctuations from the engine location, such as at the exit to the high pressure compressor 18, to the dynamic pressure transducer 36 which is located remotely from the combustor 20. The signal generated by the transducer 36 is then passed to signal processing means 40 to process the signal to indicate when combustor rumble is occurring. The signal received at the transducer 36 may be analogue, in which case the signal is passed to a filter 42, preferably a band pass filter, to extract the frequencies that relate to combustor rumble. From the filter 42 the signal is passed through a calculation block 44 that calculates the root mean square value of the signal. This value is then sampled by an analogue to digital converter 46 to digitise the signal. The digitised signal is passed to a comparator 48, which also receives a rumble threshold 50. The rumble threshold 50 may be an absolute value or may be variable depending upon the point in the flight cycle, aircraft altitude, engine speed or any other factors that affect the pressure and absolute fuel flow in the engine 10. The transducer 36 measures the pressure fluctuations at predetermined time intervals. In the case of a piezoelectric transducer, the frequency of measurements is high but for other types of transducer 36 the frequency may be lower. This can be chosen to suit the application.

Hence a set of digitised signals are provided, separated by small time intervals. Where one of the digitised signals is greater than the rumble threshold 50, the comparator 48 passes a signal that rumble is detected to a fault integrator 52. Conversely, where one of the digitised signals is less than the rumble threshold 50, the comparator 48 passes a signal to that effect to the fault integrator 52.

The fault integrator 52 is in the form of a counter, which is scaled to count between 0 and 1 in increments of N 'up counts' and M 'down counts'. Thus, when a rumble detected signal is passed to the fault integrator 52 the counter increases by an increment 1/N. When the counter reaches 1 this sets the rumble detection flag 54 to true which is then passed to control and / or monitoring functions, for example in the engine control means 34, for mitigating action to be triggered and engine health monitoring data to be logged. When a signal indicating no rumble is received by the fault integrator 52, the counter decreases by an increment 1/M. When the counter reaches 0 it sets the rumble detection flag 54 to false which is passed to the control and / or monitoring functions. Thus, any mitigating action is cancelled and further engine health monitoring data can be logged.

By providing the fault integrator 52 in the form of a counter with multiple increments, false triggering of rumble mitigation actions is prevented or reduced and combustor rumble is confirmed prior to action being commanded. The multiple increments introduce a small delay between the first detection of combustor rumble, or of cessation of rumble, and commanding action in response.

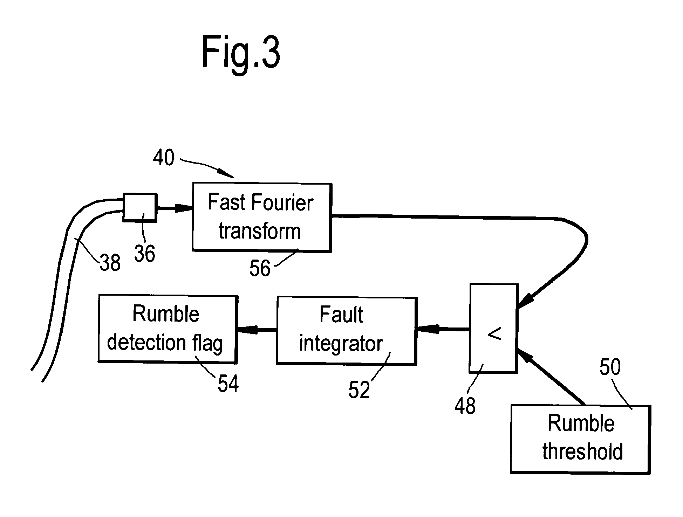

A variation on the first embodiment is shown in Figure 3, which shows a second embodiment of the apparatus and method of the present invention, in which the transducer 36 measures pressure fluctuations and provides a digital output. In this case the filter 40, root mean square calculation block 44 and analogue to digital converter 46 are not required. In their place the signal processing means 40 comprises a fast Fourier transform function 56. This function 56 not only processes the signal but samples it so that the digitised, sampled signal can be passed to the comparator 48. The comparator 48 and fault integrator 52 function in the same manner as in the first embodiment.

Although specific embodiments of the apparatus and method according to the present invention have been described, variations and modifications are possible within the scope of the invention as defined in the accompanying claims. For example, although the signal processing means 40 for the digital transducer signal has been proposed as a fast Fourier transform function, alternative digital signal processing is contemplated to fall within the scope of the present invention. For analogue signals produced by the transducer 36, a different type of filter 42 may be used, for example a low pass filter.

The fault integrator 52 may be omitted so that the rumble detection flag 54 is set immediately the digitised signal received by the comparator 48 exceeds the rumble threshold 50. The fault integrator 52 may take a different form to the described counter.

The pipe 38 may connect the transducer 36 to a different location in the engine 10 that is upstream of the combustor or combustion equipment 20, for example the exit of the intermediate pressure compressor 16 or the rear of the propulsive fan 14. Instead of the pipe 38 that has been described, any conduit or other enclosed volume that is capable of passing pressure fluctuations from the location in the engine 10 to the transducer 36 may be substituted with equal felicity.

Although the present invention has been described with respect to an aero gas turbine engine, the apparatus and method may equally be applied to an industrial or marine gas turbine engine. Similarly, although a ducted fan gas turbine engine has been described by way of illustration, a turbojet or unducted fan gas turbine engine may also benefit from the application of the present invention. Although lean burn combustion equipment is more susceptible to combustor rumble than conventional combustion equipment, the present invention is also applicable to gas turbine engines having such combustion equipment.

Although the present invention has been discussed in relation to the detection of combustor rumble, the signals generated by the transducer 36 may be processed to provide detection of core damage, particularly high pressure compressor 18 damage.

## Claims

1. A gas turbine engine (10) comprising
• combustion equipment (20) susceptible to combustor rumble;
• a dynamic pressure transducer (36) located remotely from the combustion equipment (20); and
• a conduit (38) connecting the transducer (36) with a location in the engine remote from the combustion equipment (20), the location subject to pressure fluctuations due to the combustor rumble;
whereby the transducer (36) is arranged to detect combustor rumble dependent on the pressure fluctuations received.

2. A gas turbine engine (10) as claimed in claim 1 further comprising signal processing means (40).

3. A gas turbine engine (10) as claimed in claim 2 wherein, when the transducer (36) generates an analogue signal, the signal processing means comprises a filter (42), particularly a band pass filter (42).

4. A gas turbine engine (10) as claimed in claim 2 wherein, when the transducer (36) generates a digital signal, the signal processing means (40) comprises a fast Fourier transform (56).

5. A gas turbine engine (10) as claimed in any of claims 2 to 4 wherein the signal processing means (40) comprises a rumble threshold comparator (48).

6. A gas turbine engine (10) as claimed in any of claims 2 to 5 wherein the signal processing means (40) comprises a fault integrator (52).

7. A gas turbine engine (10) as claimed in claim 6 wherein the fault integrator (52) is an incremental counter.

8. A gas turbine engine (10) as claimed in any preceding claim wherein the transducer (36) is an air pressure sensor.

9. A gas turbine engine (10) as claimed in any preceding claim wherein the location in the engine remote from the combustion equipment (20) is at the exit of a compressor stage (16, 18) or the exit of a propulsive fan (14).

10. A method of detecting combustor rumble in a gas turbine engine (10) comprising the steps of:
• locating a dynamic pressure transducer (36) remotely from combustion equipment (20) susceptible to combustor rumble;
• connecting a conduit (38) between the transducer (36) and a location in the engine remote from the combustion equipment (20) and subject to pressure fluctuations due to the combustor rumble; and
• measuring the pressure fluctuations using the transducer (36) to detect combustor rumble.

11. A method as claimed in claim 10 comprising the further step of processing the signal measured by the transducer (36).

12. A method as claimed in claim 11 wherein the further step of processing the signal comprises at least one of filtering the signal, applying a root mean square calculation to the signal, applying a fast Fourier transform (56) to the signal and comparing the signal to a rumble threshold (50).

13. A method as claimed in any of claims 11 to 12 comprising the further step of applying fault integration to the signal.

14. A method as claimed in claim 13 wherein the further step of applying fault integration comprises increasing a counter by an increment for each signal above a rumble threshold (50) and decreasing the counter by an increment for each signal below the threshold (50).

15. A method as claimed in any of claims 10 to 14 comprising the further step of setting a rumble detection flag (54) depending on the measured pressure fluctuations.

16. A method as claimed in any of claims 10 to 15 comprising the further step of passing the measured pressure fluctuations or the rumble detection flag (54) setting to an engine control means (34).
